# EUROPÄISCHE PATENTSCHRIFT

(11) **EP 0 540 564 B1**
(45) Veröffentlichungstag und Bekanntmachung des Hinweises auf die Patenterteilung: **17.05.1995**
(21) Anmeldenummer: 91912926.2
(22) Anmeldetag: 24.07.1991
(51) Int. Cl.: F16K 31/04, F16H 25/20

(54) **ARMATUR ZUM ABSPERREN EINER STRÖMUNG**
FLOW CUT-OFF FITTING
ROBINETTERIE POUR L'ARRET D'UN ECOULEMENT

(30) Priorität: 25.07.1990 DE 4023636
(43) Veröffentlichungstag der Anmeldung: 12.05.1993
(73) Patentinhaber: SIEMENS AKTIENGESELLSCHAFT, 80333 München (DE)
(72) Erfinder: SCHABERT, Hans-Peter, D-8520 Erlangen (DE); LAURER, Erwin, D-8521 Möhrendorf (DE)
(86) Internationale Anmeldenummer: DE9100600
(87) Internationale Veröffentlichungsnummer: WO9201884

(56) Entgegenhaltungen:
- WO-A-87/03659
- DE-A- 2 606 440
- FR-A- 2 240 398

## Beschreibung

Die Erfindung bezieht sich auf eine Armatur zum Absperren einer Strömung gemäß dem Oberbegriff des Hauptanspruches. Eine Armatur dieser Art ist z.B. aus der DE-A-3 314 781 bekannt.

Armaturen zum Absperren einer Strömung haben häufig eine mit einem Verschlußstück, beispielsweise ein Ventilkegel oder ein Ventilteller, versehene axial verschiebbare Spindel, die von einer in einem Gehäuse drehbar gelagerten Spindelmutter bewegt wird. Beim Hineinfahren des Verschlußstückes in den Sitz ist ein vorgegebenes Drehmoment erforderlich. Dieses Drehmoment hängt ab vom Auslegungsdruck in der abzusperrenden Strömung, von der Spindelgeometrie und vom Reibwert im Gewinde der Spindelmutter. Für ein Hochdruck-Ventil mit der Nennweite 25 mm ist beispielsweise ein Drehmoment-Sollwert (Mindestwert) von etwa 30 Nm üblich. Durch Korrosion können sich jedoch nach langer Standzeit die Reibwerte im Gewinde der Spindelmutter beträchtlich erhöhen. Zum Lösen der Spindelmutter sind dann entsprechend höhere Drehmomente, beispielsweise etwa 80 Nm, erforderlich.

Ein Stellantrieb für die Armatur muß dann so ausgelegt werden, daß er dieses hohe Lösemoment auch bei ungünstigen Betriebsbedingungen aufbringen kann. Bei einem elektromotorischen Stellantrieb kann dies beispielsweise eine niedrige, durch Schwankungen der Netzspannung verursachte Versorgungsspannung sein. Bei hoher Netzspannung, kalter Wicklung im Elektromotor, positiver Motorfertigungstoleranz und hoher Armaturensteifigkeit kann der Stellantrieb dann jedoch ein viel höheres Drehmoment entwickeln, wenn er nicht drehmomentabhängig abgeschaltet wird. Bei ungünstiger Zusammenwirkung aller Toleranzen kann dieses Drehmoment beispielsweise auf 300 Nm ansteigen. Versagt die drehmomentabhängige Abschaltung, so kann im ungünstigen Fall somit ein Drehmoment auftreten das dem 10-fachen des Solldrehmomentes entspricht. Die Spindel wird dann stark überlastet und möglicherweise geknickt.

In der EP-B1-0 193 776 ist eine Armatur offenbart, bei der das vom Stellantrieb zur Erzeugung der Spindelkraft zur Verfügung gestellte Drehmoment bereits während der Stellbewegung verringert wird. Hierzu ist eine Bremsbuchse vorgesehen, die sich mit stirnseitigen Gleitflächen auf einem Bremsgehäuse abstützt und nach einem leeren Drehwinkel von etwa 330° von der Spindelmutter mitgedreht wird. Beim Zurückdrehen der Spindelmutter entfällt dann die Bremsung über den Leerwinkelbereich, so daß das vom Stellantrieb erzeugte Drehmoment vollständig zum Lösen der im Muttergewinde verspannten Spindel zur Verfügung steht. Das in der Bremse entstehende Bremsmoment wird bereits vor Erreichen der Endlage wirksam und ist proportional der Spindelkraft und dem Reibwert der Gleitflächen. Diese Bremse kann beispielsweise so ausgelegt werden, daß sie beim Hineinfahren in die Endstellung etwa 75 % des Antriebsdrehmoments aufzehrt. Entsprechend dem vorgenannten Zahlenbeispiel bedeutet dies, daß der Antrieb nicht für ein Mindestdrehmoment von 30 Nm, sondern von 120 Nm ausgelegt werden müßte. Er wird dann in vielen Fällen zu aufwendig und gewichtsmäßig zu schwer. Außerdem werden dann die beim Absteuerversagen unter ungünstigen Bedingungen auftretenden Drehmomente ebenfalls entsprechend erhöht.

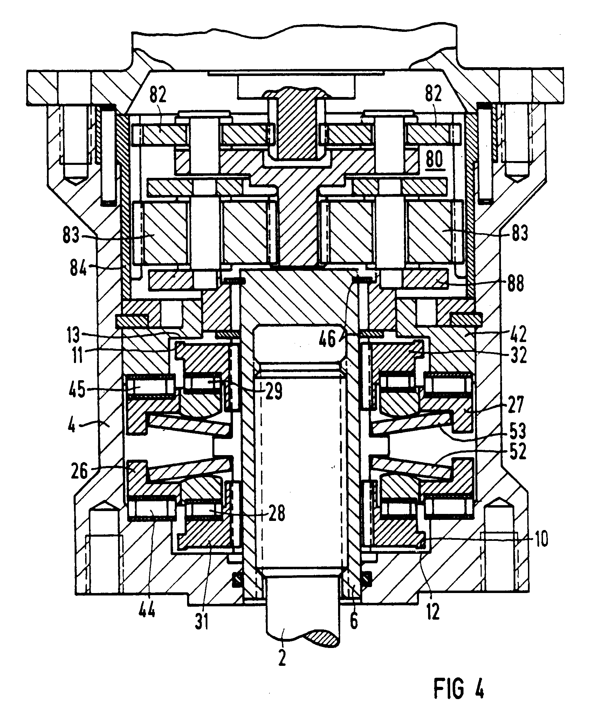

Aus der deutschen Offenlegungsschrift 33 14 781 ist aus der Figur 4 eine Armatur bekannt, bei der die Spindelmutter erst nach Überschreiten einer vorgegebenen Spindelkraft zusätzlich gebremst wird. Dies wird dadurch erreicht, daß die Spindelmutter im Armaturengehäuse axial federnd gelagert und mit einem Anlaufring versehen ist, der bei Überschreiten einer vorgegebenen Spindelkraft gegen eine aus Ringfedern bestehende und sich im Gehäuse abstützende Bremsbuchse gepreßt wird. Durch das zwischen dem Anlaufring und den Bremsbuchsen erzeugte Bremsmoment wird eine Bremswirkung erzeugt, so daß nur ein Teil des vom Antrieb zur Verfügung gestellten Drehmomentes auf die Spindel wirksam wird. Durch diese Maßnahmen wird die Belastung der Spindel bei einem sogenannten Absteuerversagen wirksam verringert.

Bei dieser bekannen Armatur wird jedoch nur ein Teil der gesamten Spindelkraft als bremsmomenterzeugende Bremskraft wirksam. Der auf diese Weise erzeugte Bremsmoment kann unter ungünstigen Bedingungen nicht ausreichen, um eine Überbelastung der Spindel zu verhindern.

Der Erfindung liegt nun die Aufgabe zugrunde, eine Armatur mit einer Bremseinrichtung zum Beherrschen des Absteuerversagens anzugeben, bei der die in der Bremseinrichtung wirksame Bremskraft möglichst groß ist.

Die genannte Aufgabe wird gelöst mit einer Armatur gemäß den Merkmalen des Anspruchs 1, die mit einem in einem Gehäuse drehfixierten und axial verschiebbaren Gewindeteil, einem im einem Gehäuse axial federnd und drehbar gelagerten Gewindeteil sowie einer Bremseinrichtung mit wenigstens zwei einander zugewandten Reibflächen versehen ist, die bei Überschreiten einer vorgegebenen Sollkraft auf das drehfixierte Gewindeteil zum Abbremsen der Drehbwegung des drehbaren Gewindeteils durch eine Axialverschiebung mit einer Bremskraft gegeneinander gepreßt werden und eine Bremsfläche bilden, wobei eine der jeweils einander zugewandten Reibflächen drehfixiert mit dem drehbaren Gewindeteil verbunden ist, und wobei zur federnden Lagerung des drehbaren Gewindeteils in wenigstens einer axialen Richtung eine wenigstens eine Tellerfeder enthaltende Tellerfedergruppe vorgesehen ist und die Bremskraft bezogen auf die Breite der Tellerfedergruppe auf einen Zwischenradius derselben Tellerfedergruppe eingeleitet wird. Bei wirksam gewordener Bremseinrichtung sind wenigstens zwei Reibflächen gegeneinander gepreßt und bilden eine Bremsfläche. Eine Reibfläche ist drehfixiert mit dem drehbar gelagerten Gewindeteil verbunden. Da zur federnden Lagerung des drehbaren Gewindeteils in wenigstens einer axialen Richtung eine wenigstens eine Tellerfeder enthaltende Tellerfedergruppe vorgesehen ist und die Bremskraft bezogen auf die Breite der Tellerfedergruppe auf einem Zwischenradius derselben Tellerfedergruppe eingeleitet wird, wirkt die Tellerfedergruppe bei Überschreiten einer vorgegebenen Sollkraft als Hebel und die auf die Spindel wirkende Gesamtkraft wird unter gleichzeitiger Entlastung des Außen-oder Innenradius der Tellerfedergruppe zunehmend als Bremskraft wirksam. Dadurch wird bei gleicher Spindelgesamtkraft die Bremswirkung gegenüber den bekannten Ausführungsformen erhöht und die Gefahr eines Umknickens der Spindel reduziert. In der Armatur können auch zwei Bremseinrichtungen gemäß der Erfindung derart vorgesehen sein, daß sich eine Bremswirkung für beide Hubrichtungen der Spindel ergibt.

Man kann den Zwischenradius auf der Tellerfedergruppe in seiner Größe verändern und dadurch bestimmen, bei welcher Spindelgesamtkraft die vollständige Lastübernahme durch die Bremsfläche erfolgt. Der zugehörige Schwellenwert der Spindelgesamtkraft ist umso näher an der Sollkraft, je kleiner die Abweichung des Zwischenradius vom Innenradius der Tellerfedergruppe ist. Dies ist dann von Interesse, wenn eine dünne Spindel mit geringer Knicksicherheit verwendet wird.

Vorzugsweise weicht der Zwischenradius um wenigstens 20 % der Breite der Tellerfedergruppe vom Innen- oder Außenradius ab.

Für die Drehfixierung wenigstens einer der beiden Reibflächen ist vorzugsweise ein vorgegebener Leerwinkel vorgesehen. Beim Lösen des drehbaren Gewindeteils wird dann diese Reibfläche während der Drehbewegung innerhalb des Leerwinkels nicht mitbewegt. Zum Lösen des drehbaren Gewindeteils muß somit das in den Reibflächen wirksame Bremsmoment nicht aufgebracht werden, sondern lediglich das Drehmoment für das Lösen des Gewindes und für das übliche reibungsarme Axiallager des drehbar gelagerten Gewindeteils. Während der Drehbewegung des drehbaren Gewindeteils im Leerwinkelbereich werden die beiden Reibflächen entlastet und die Bremswirkung zwischen den beiden Reibflächen ganz oder teilweise aufgehoben. Der Leerwinkel kann sowohl für die mit dem Gehäuse drehfixiert verbundene Reibfläche als auch für die mit dem drehbaren Gewindeteil drehfixiert verbundene Reibfläche vorgesehen sein. Der Leerwinkel entspricht dabei vorzugsweise einem Hub der Spindelmutter von etwa 0,3 mm, wenigstens etwa 0,01 mm. Während der Leerwinkel durchlaufen wird, sorgt in einer bevorzugten Ausgestaltung ein reibungsarmes Lager, insbesondere ein Wälzlager, für die Übertragung der entstehenden Bremskraft.

In einer bevorzugten Ausführungsform sind Reibflächen an der Stirnfläche einer in einem Gehäuse axial verschiebbar angeordneten Bremshülse angeordnet. In einer weiteren bevorzugten Ausgestaltung der Erfindung befinden sich die mit dem drehbaren Gewindeteil drehfixiert verbundenen Reibflächen auf wenigstens einem axial verschiebbar auf diesem Gewindeteil angeordneten Bremsring.

In einer weiteren vorteilhaften Ausgestaltung der Erfindung ist ein drehfixierter mit dem drehbaren Gewinde verbundener axial verschiebbarer Bremsring vorgesehen, der zwischen zwei drehfixiert mit dem Gehäuse verbundenen axial verschiebbaren Bremshülsen angeordnet ist. Dadurch werden zwei Bremsflächen wirksam und die Bremswirkung vergrößert.

Die Bremsringe sind auf ihrer Innenfläche vorzugsweise mit wenigstens drei Ausnehmungen für einen mit dem drehbaren Gewindeteil drehmomentschlüssig verbundenen Mitnehmerzahn versehen. Die Ausnehmungen und der ihnen jeweils zugeordnete Mitnehmerzahn sind vorzugsweise mit schrägen Flanken versehen. Dadurch entsteht eine Selbstzentrierung des Bremsringes, so daß er mit einem ausreichenden radialen Spiel, vorzugsweise mehr als 0,02 mm, gegen das drehbar gelagerte Teil ausgestattet werden kann. Beim Durchlaufen des Leerwinkels berühren sich dann Bremsring und drehbar gelagertes Gewindeteil nicht.

Die Reibflächen sind in einer vorteilhaften Ausgestaltung mit einem auch unter Schmiermittel gut wirksamen Reibbelag versehen sein. Zusätzlich ist es von Vorteil, wenn die Reibflächen mit schmiermittelverdrängenden Radialnuten versehen sind. Durch diese Maßnahmen wird eine vom Schmierzustand der Reibflächen nur wenig abhängige Bremswirkung erzielt.

Eine besonders gute Bremswirkung wird erzielt, wenn die mittlere Entfernung der Reibflächen von der Mittelachse des axial verschiebbaren Gewindeteils wenigstens das Doppelte des Flankenradius des Gewindes beträgt.

Der Zusammenbau des Lagers des drehbaren Gewindeteils und des Getriebes in einem gemeinsamen Gehäuse ergibt eine besonders platzsparende Anordnung .

In einer bevorzugten Ausgestaltung der Erfindung ist außerdem zum Antrieb des drehbaren Gewindeteils ein darauf aufgesetztes axial verschiebbares Zahnradgetriebe, insbesondere ein Planetengetriebe, vorgesehen. Dadurch wird der Anteil der Bremskraft an der Spindelgesamtkraft erhöht.

Das axial verschiebbare Gewindeteil kann beispielsweise eine im Gehäuse drehfixierte Spindel oder eine im Gehäuse drehfixierte Mutter sein.

Eine zuverlässige Beherrschung eines elektrischen Absteuerversagens wird insbesondere dann erzielt, wenn die erfindungsgemäße Armatur mit einem Stellantrieb versehen wird, bei dem durch mechanische und/oder elektrische Mittel, wie sie beispielsweise in der EP-B1-0 193 776 offenbart sind, erreicht wird, daß beim Herausfahren aus der Endstellung ein höheres Drehmoment bereitgestellt wird als beim Hineinfahren in die Endstellung. Es besteht dann die Chance, daß die Armatur nach Behebung einer Störung in der Steuerung ohne mechanischen Eingriff weiterbetrieben werden kann.

Zur weiteren Erläuterung der Erfindung wird auf die Ausführungsbeispiele der Zeichnung verwiesen, in deren

FIG 1 eine Armatur gemäß der Erfindung in einem Längsschnitt schematisch dargestellt ist.

FIG 2 und 3 zeigen ein weiteres vorteilhaftes Ausführungsbeispiel einer Armatur in einem Längs- bzw. Querschnitt.

In FIG 4 ist eine besonders kompakte Ausführungsform mit einem im Gehäuse der Armatur integrierten Getriebe in einem Längsschnitt veranschaulicht.

FIG 5 zeigt eine weitere vorteilhafte Ausgestaltung einer Armatur gemäß der Erfindung ebenfalls in einem Längsschnitt.

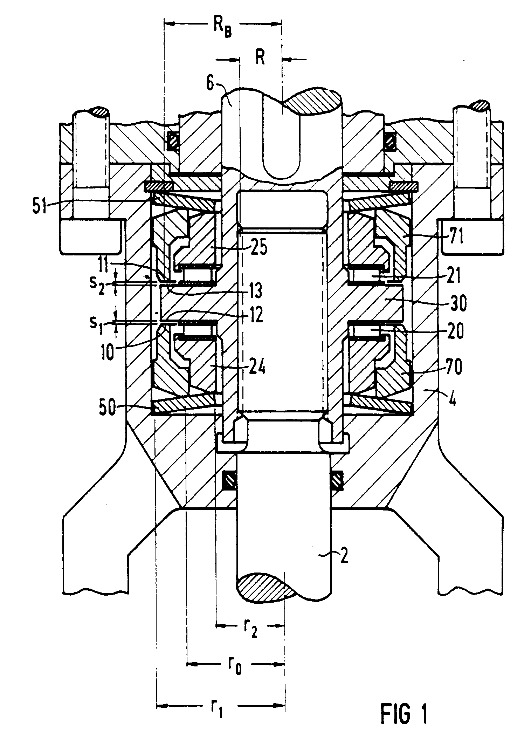

Gemäß **FIG 1** enthält eine Armatur als drehfixiertes Gewindeteil eine Spindel 2 mit einem in der Figur nicht näher dargestellten Verschlußstück, die von einer drehbar in einem Gehäuse 4 gelagerten Spindelmutter 6 in Axialrichtung bewegbar ist. Das Verschlußstück hat zwei Endstellungen, die es am Ventilsitz bzw. am Rücksitz erreicht.

Die Spindelmutter 6 ist mit einem Bremsring 30 versehen, der axial- und drehfixiert mit ihr verbunden ist. Die Spindelmutter 6 stützt sich am Bremsring 30 über Wälzlager 21 und 22 sowie Lagerbuchsen 24 bzw. 25 und Tellerfedergruppen 50 bzw. 51 im Gehäuse 2 ab. Im Beispiel der Figur bestehen die Tellerfedergruppen 50 und 51 jeweils aus einer einzigen Tellerfeder. Es können aber auch jeweils mehrere zu einer Gruppe zusammengefaßte parallelgeschichtete Tellerfedern vorgesehen sein. Dem Bremsring 30 ist im äußeren Randbereich 12, 13 seiner Stirnflächen jeweils die gegenüberliegende Stirnfläche einer Bremshülse 70 bzw. 71 zugeordnet. Die Bremshülsen 70 und 71 sind im Beispiel der Figur nicht formschlüssig drehfixiert im Gehäuse 4 angeordnet, sondern übertragen ihr Bremsmoment mit Reibungsschluß als Drehfixierung in die Tellerfedergruppe 50 und von dort ebenso ins Gehäuse 4. In einer Ausgestaltung kann jedoch auch eine Drehfixierung für die Bremshülsen 70 und 71, beispielsweise mit Paßfedern, vorgesehen sein.

Die Stirnflächen 10 und 11 der Bremshülsen 70 und 71 und die Stirnflächen 12 und 13 des Bremsringes 30 sind als ringförmige Reibflächen 12, 13 bzw. 10, 11 ausgebildet. Diese Reibflächen 10 bis 13 sind vorzugsweise mit einem schmiermittelverdrängenden Reibbelag oder mit schmiermittelverdrängenden Radialnuten versehen, so daß sich kein zusammenhängender Schmierfilm ausbilden kann. Die Reibbeläge der am Bremsring 30 und an den Bremshülsen 70 und 71 vorhandenen Reibflächen 12, 13 bzw. 10, 11 bestehen vorzugsweise aus unterschiedlichen Werkstoffen, beispielsweise aus Bronze und aus Stahl.

Zwischen den Reibflächen 12 und 13 des Bremsringes 30 und den Reibflächen 10 bzw. 11 der Bremshülsen 70 bzw. 71 ist jeweils ein Spiel s₁ bzw. s₂ eingestellt, das in kräftefreier Ruhelage der Spindel 2 in etwa gleich groß ist. Bei sich drehender Spindelmutter 6 und sich axial verschiebener Spindel 2 stellen sich Spiele s₁ und s₂ ein, die von der Federsteifigkeit der Tellerfedergruppen 50 und 51 und von den durch Reibung im Muttergewinde verursachten Bremsmomenten abhängen.

Am Ende des Fahrwegs der Spindel 2, wenn das Verschlußstück den Ventilsitz erreicht hat, steigt die auf die Spindel 2 ausgeübt Kraft steil an und die Spindelmutter 6 beginnt gegen die Federwirkung einer Tellerfeder, beispielsweise bei nach unten fahrender Spindel 2 gegen die Federwirkung der Tellerfedergruppe 51, zu steigen und der Bremsring 30 bewegt sich nach oben. Die von der Tellerfedergruppe 51 ausgeübte Federkraft wird durch die Lage der Auflagefläche der Lagerbuchse 24 beeinflußt. Dies befindet sich im Beispiel der Figur am inneren Rand der Tellerfedergruppe 51, also an einer Stelle, an der die Federsteifigkeit der Tellerfedergruppe 51 am geringsten ist. Das Spiel s₂ zwischen oberer Reibfläche 13 des Bremsringes 30 und der Reibfläche 11 der Bremshülse 71 wird kleiner und verschwindet bei einer vorgegebenen Sollkraft auf die Spindel 2, beispielsweise etwa 15 kN, die sich im wesentlichen aus dem Federweg und den Federsteifigkeiten der Tellerfedergruppen 50 und 51 ergibt.

Die Reibflächen 11 und 13 werden dann gegen die Wirkung der Tellerfedergruppe 51 mit einer Bremszusatzkraft aneinandergepreßt und bilden eine Bremsfläche. Somit entsteht ein zusätzliches Bremsmoment, das vom mittleren Abstand R_{B} der Reibflächen von der Spindelachse, dem Reibungskoeffizienten der aus den Reibflächen 12 und 13 gebildeten Bremsfläche und dem Anteil an der Gesamtspindelkraft abhängt, der über die Bremshülse 71 auf die Tellerfedergruppe 51 geleitet wird. Die von der Bremshülse 71 auf die Tellerfedergruppe 51 ausgeübte Kraft wird bezogen auf die Breite r₁ - r₂ der Tellerfedergruppe auf einem Zwischenradius r₀ eingeleitet. Die von der Bremshülse 71 ausgeübte Kraft wird vorzugsweise auf einem Zwischenradius r₀ eingeleitet, der die Bedingung r₁ - 0,2 (r₁-r₂) ≧ r₀ ≧ r₂ + 0,2 (r₁-r₂) erfüllt, insbesondere etwa bei r₀ = (r₁+r₂)/2. Bei r₀ = (r₁+r₂)/2 ist die Federsteifigkeit etwa doppelt so groß wie am inneren Radius. Beim Weiterdrehen verlagert sich die Gesamtspindelkraft dann zunehmend auf den mittleren Radius. Sobald die Gesamtkraft den doppelten Sollwert erreicht hat, ist in diesem Beispiel der Innenradius annähernd vollständig entlastet. Die Gesamtkraft wirkt dann auf die Bremshülsen und steht vollständig für Bremszwecke zur Verfügung.

Da der Abstand R_{B} größer als der Flankenradius R des Muttergewindes ist, ergibt sich eine wirksame Begrenzung der vom Antrieb auf die Spindel 2 ausgeübten Axialkraft. Der Abstand R_{B} beträgt vorzugsweise wenigstens das Doppelte, insbesonbere das Dreifache des Flankenradius R. Durch diese Maßnahme wird bei einem Absteuerversagen des Antriebes eine Ausknickung der Spindel 2 vermieden. Während das Drehmoment auf beispielsweise den 10-fachen Nennwert ansteigt, bleibt die Spindelkraft unter dem etwa 3-fachen Nennwert.

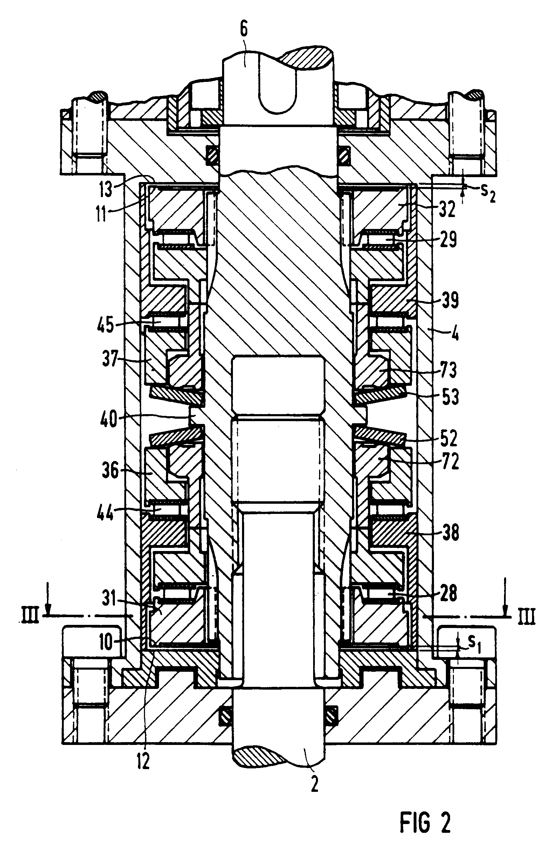

In der Ausführungsform nach **FIG 2** ist die Spindelmutter 6 mit einem Mitnehmerflansch 40 versehen, an dem die Spindelkraft über sich mitdrehende Tellerfedergruppen 52 und 53, über Druckhülsen 36 bzw. 37 sowie über Lagerbuchsen 38 bzw. 39 in das Gehäuse 4 eingeleitet wird. Zwischen den Druckhülsen 36 und 37 und den Lagerbuchsen 38 bzw. 39 befindet sich jeweils ein Wälzlager 44 bzw. 45. Auf der Spindelmutter 6 sind zwei Bremsringe 31 und 32 axial verschiebbar angeordnet, die auf axial verschiebbaren Zwischenhülsen 72 bzw. 73 wälzgelagert sind. Aus Montagegründen werden die Zwischenhülsen 72 und 73 als jeweils zwei aufeinandergesetzte Ringe ausgeführt. Die Bremsringe 31, 32 sind vorzugsweise mit einem vorgegebenen Radialspiel gegenüber der Spindelmutter 6 reibungsarm über Wälzlager 28 bzw. 29 gelagert. Die Bremsringe 31 und 32 sind jeweils am Außenrand ihrer der Gehäusewand zugewandten Stirnflächen mit ringförmigen Reibflächen 10 bzw. 11 versehen. Auf den ihnen zugewandten Oberflächenbereiche der Gehäusewand sind ebenfalls Reibflächen 12 bzw. 13 angeordnet.

Die beispielsweise nach oben steigende Spindel 2 leitet zunächst die Spindelkraft über die Tellerfedergruppe 53 auf die Druckhülse 37 ein. Dabei verschiebt sich über das Wälzlager 29 der Bremsring 32 gegen die Gehäusewand, bis das Spiel s₂ verschwindet. Die Zwischenhülse 73 liegt in Analogie zum Ausführungsbeispiel gemäß Figur 1 ebenfalls auf einen mittleren Radius der Tellerfedergruppe 53 auf. Auch hier verlagert sich beim Weiterdrehen die gesamte Spindelkraft zunehmend auf die von Reibflächen 11 und 13 gebildete Bremsfläche, so daß die nahezu die gesamte Spindelkraft für das wirksame Bremsmoment zur Verfügung steht.

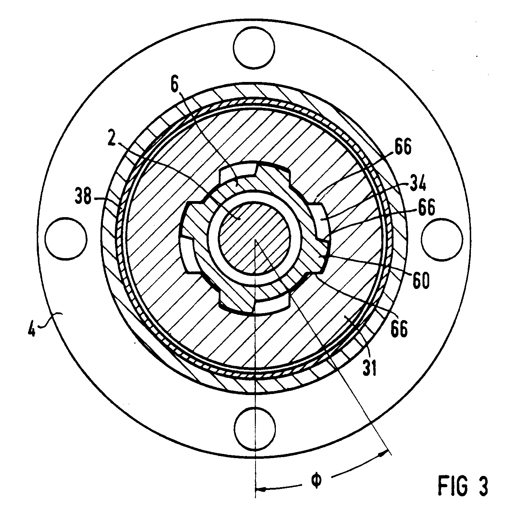

Gemäß **FIG 3** ist die Spindelmutter 6 mit vier Mitnehmerzähnen 60 versehen, die in entsprechende Ausnehmungen 34 des Bremsringes 31 greifen. Nach Überstreichen eines Leerwinkels φ berühren sich die Flanken 66 von Mitnehmerzahn 60 und Ausnehmung 34 und es ergibt sich eine drehmomentschlüssige Verbindung zwischen der Spindelmutter 6 und dem Bremsring 31. Dieser Leerwinkel φ ist wenigstens so groß, daß der zu ihm gehörende Spindelhub wenigstens etwa 0,01 mm beträgt. Vorzugsweise ist jedoch ein Leerwinkel φ vorgesehen, der beispielsweise einen Spindelhub von etwa 0,1 mm bis 0,5 mm bewirkt. Bei einem Muttergewinde 24 × 3 (Trapezgewinde) entspricht dies einem Leerwinkel φ zwischen 12° und 60°.

Zum Lösen der Spindel 2 aus der Endstellung wird die Drehbewegung der Spindelmutter 6 umgekehrt. Durch den verfügbaren Leerwinkel φ der Drehfixierung zwischen Spindelmutter 6 und Bremsring 31 wird die drehmomentschlüssige Verbindung zwischen der Spindelmutter 6 und dem Bremsring 31 gelöst und das gesamte Antriebsmoment steht zum Lösen der im Muttergewinde verspannten Spindel 2 zur Verfügung. Zugleich wird die aus den Reibflächen 10 und 12 (Figur 2) gebildete Bremsfläche durch eine Axialbewegung der Spindelmutter 6 entlastet. Wenn dann nach Durchlaufen des Leerwinkels φ die Reibfläche 10 (Figur 2) mitgedreht wird, ist die Bremswirkung ganz oder überwiegend aufgehoben, so daß das vom Stellantrieb verfügbare Drehmoment problemlos zum Weiterdrehen ausreicht.

Im Ausführungsbeispiel gemäß **FIG 4** sind die Wälzlager 28 und 44 sowie die Wälzlager 29 und 45 jeweils koaxial zueinander in etwa der gleichen Ebene angeordnet. Duch diese Maßnahme ergibt sich eine verringerte Bauhöhe der Armatur.

Zum Antrieb der Spindelmutter (6) ist ein Zahnradgetriebe 80 mit einem axialen Spiel vorgesehen, das im Gehäuse 4 angeordnet ist. Im Ausführungsbeispiel ist das Zahnradgetriebe 80 ein 2-stufiges Planetengetriebe mit einer Übersetzung i=64, dessen Planeten 82 und 83 innerhalb eines Hohlkranzes 84 umlaufen. Auf der Spindelmutter 6 ist mit Sicherungsringen 46 axial- und drehfixiert der Planetenträger 88 des Planetengetriebes befestigt. Die Planeten 82 und 83 können sich gemeinsam mit der Spindelmutter 6 unter der Last der Gewindespindel 2 in axialer Richtung im Rahmen des durch die Tellerfedergruppen 52 und 53 vorgegebenen Federweges bewegen. Die axiale Gleitbewegung findet also reibungsarm zwischen den Zähnen der Planeten 8 2 und 83 und des Hohlkranzes 84 statt. Eine sonst übliche Nut-Paßfeder-Schiebeverbindung kann deshalb entfallen. Durch diese Maßnahme wird der als Bremskraft wirksame Anteil der Spindelgesamtkraft weiter erhöht.

In den Figuren sind stets Ausführungsbeispiele dargestellt, bei denen die Spindelmutter im Gehäuse drehbar und die Spindel drehfixiert ist. Die Erfindung ist jedoch auch auf Armaturen anwendbar, bei denen die Spindel von oben kommend in einer mit dem Verschlußstück verbundenen und im Gehäuse drehfixierten Mutter drehbar ist. Dann tritt der Lagerkörper am oberen Ende der Spindel an die Stelle der in den Figuren beschriebenen Spindelmutter.

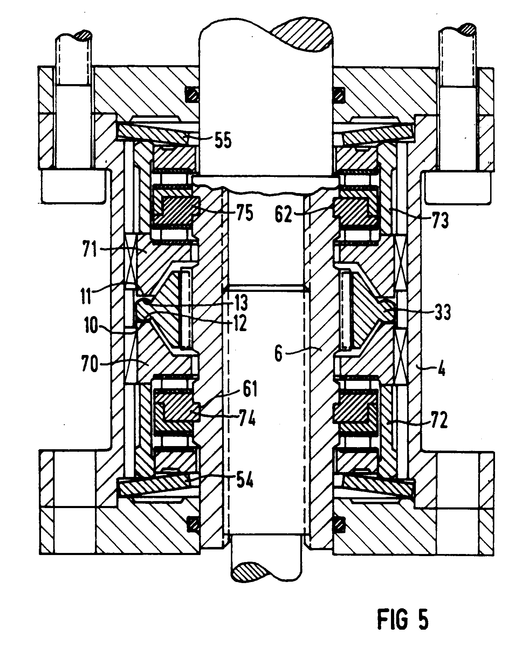

Im Ausführungsbeispiel nach Figur 5 ist auf der Spindelmutter 6 ein axial verschiebbarer Bremsring 33 vorgesehen, der zwischen zwei Bremshülsen 70 und 71 angeordnet ist und sich gegenüber der Spindelmutter 6 um einen bestimmten Leerwinkel, beispielsweise 45°, verdrehen kann. Diese Bremshülsen 70 und 71 sind drehfixiert mit dem Gehäuse 4 verbunden und im Gehäuse 4 axial verschiebbar angeordnet. Der Bremsring 33 ist zur Erhöhung der Bremskraft mit gewölbten Reibflächen 12 und 13 versehen, so daß sich bei Berührung mit den Reibflächen 10 und 11 der Bremshülsen 70 bzw. 71 eine kleinere wirksame Bremsfläche ergibt.

Auf der Spindelmutter 6 sind in Nuten 61 und 62 axial fixierte und aus Montagegründen mehrteilig ausgeführte Zwischenringe 74 bzw. 75 angeordnet. Über diese Zwischenringe 74 und 75 stützt sich die Spindelmutter 6 jeweils über Wälzlager und Tellerfedern 54 und 55 drehbar und beidseitig federnd im Gehäuse 4 ab. Bei beispielsweise nach oben steigender Spindelmutter 6 nimmt der Zwischenring 74 über ein zwischen ihm und der Bremshülse 70 angeordnetes Wälzlager die Bremshülse 70 und über diese den Bremsring 33 nach oben mit, bis das Spiel zwischen Bremsring 33 und Bremshülsen 70 und 71 verschwindet. Die Bremskraft auf die sich so bildenden zwei Bremsflächen wird dann ausgehend vom Gehäuse 4 über einen Zwischenradius der Tellerfeder 55 und die axial verschiebbare Zwischenhülse 73 eingeleitet. In diesem Ausführungsbeispiel werden somit zwei wirksame Bremsflächen gebildet. Dadurch ist die Bremswirkung gegenüber den Ausführungsbeispielen nach Figuren 1 bis 4 nochmals erhöht.

Zur Erhöhung der Bremswirkung können bei allen Ausführungsbeispielen die Reibflächen konisch ausgebildet sein. Die Neigung der Konusmantellinie beträgt dabei vorzugsweise 35° bis 40°. Eine der einander zugewandten konischen Reibflächen, beispielsweise die auf dem Bremsring angeordnete Reibfläche, ist dann vorzugsweise gehärtet und glatt ausgeführt, während die ihr gegenüberliegende Reibfläche als Spießkant ausgeführt ist.

## Patentansprüche

1. Armatur, insbesondere zum Absperren einer Strömung, mit einem in einem Gehäuse (4) drehfixierten und axial verschiebbaren Gewindeteil (2), einem im einem Gehäuse (4) axial federnd und drehbar gelagerten Gewindeteil (6) sowie einer Bremseinrichtung mit wenigstens zwei einander zugewandten Reibflächen (11, 13), die bei Überschreiten einer vorgegebenen Sollkraft auf das drehfixierte Gewindeteil (2) zum Abbremsen der Drehbwegung des drehbaren Gewindeteils (6) durch eine Axialverschiebung mit einer Bremskraft gegeneinander gepreßt werden und eine Bremsfläche bilden, wobei eine der jeweils einander zugewandten Reibflächen (13) drehfixiert mit dem drehbaren Gewindeteil (6) verbunden ist und die andere Reibfläche (11) drehfixiert oder reibungschlüßig mit dem gehäuse verbunden ist, wobei zur federnden Lagerung des drehbaren Gewindeteils (6) in wenigstens einer axialen Richtung eine wenigstens eine Tellerfeder enthaltende Tellerfedergruppe (50 bzw. 51) vorgesehen ist,
**dadurch gekennzeichnet,** daß ein kraftübertragendes Bauteil (71) die Bremskraft bezogen auf die Breite (r₁ -r₂) der Tellerfedergruppe (50 bzw. 51) auf einen Zwischenradius (r₀) derselben Tellerfedergruppe (50 bzw. 51) einleitet.

2. Armatur nach Anspruch 1, **dadurch gekennzeichnet,** daß der Zwischenradius (r₀) um wenigstens 20 % der Breite (r₁ - r₂) vom Innen- oder Außenradius (r₂ bzw. r₁) abweicht.

3. Armatur nach Anspruch 1, **dadurch gekennzeichnet,** daß die Reibfläche (11), die der mit dem Gewindeteil (6) drehfixiert verbundenen Reibfläche (13) zugewandt ist, reib- oder formschlüssig drehfixiert mit dem Gehäuse (2) verbunden ist.

4. Armatur nach Anspruch 1, **dadurch gekennzeichnet,** daß für die Drehfixierung wenigstens einer der einander zugewandten Reibflächen (13) ein vorgegebener Leerwinkel (φ) vorgesehen ist.

5. Armatur nach Anspruch 1, **dadurch gekennzeichnet,** daß zur axialen Kraftübertragung auf die Reibflächen (11, 13) ein reibungsarmes Lager (29) vorgesehen ist.

6. Armatur nach Anspruch 4, **dadurch gekennzeichnet,** daß der Leerwinkel (φ) für die mit dem drehbaren Gewindeteil (6) drehfixiert verbundenen Reibflächen (12, 13) vorgesehen ist.

7. Armatur nach Anspruch 4, **dadurch gekennzeichnet,** daß der Leerwinkel (φ) einem Hub des drehbaren Gewindeteils (6) von wenigstens 0,01 mm entspricht.

8. Armatur nach Anspruch 1, **dadurch gekennzeichnet,** daß das kraftübertragende Bauteil als im Gehäuse (4) axial verschiebbare Bremshülse (70 bzw. 71) ausgebildet ist, und daß Reiblächen (10, 11) vorgesehen sind, die an einer Stirnfläche der Bremshülse angeordnet sind.

9. Armatur nach Anspruch 1, **dadurch gekennzeichnet,** daß sich die mit dem drehbaren Gewindeteil (6) drehfixiert verbundenen Reibfläche (12, 13) auf wenigstens einem axial verschiebbar auf diesem Gewindeteil (6) angeordneten Bremsring (32) befinden.

10. Armatur nach Anspruch 1, **dadurch gekennzeichnet,** daß ein drehfixiert mit dem drehbaren Gewindeteil (6) verbundener, axial verschiebbarer Bremsring (33) vorgesehen ist, der zwischen zwei drehfixiert mit dem Gehäuse (4) verbundenen axial verschiebbaren Bremshülsen (70, 71) angeordnet ist, wobei die Bremshülsen das kraftübertragende Bauteil bilden.

11. Armatur nach Anspruch 9 oder 10, **dadurch gekennzeichnet,** daß der oder die Bremsringe (32) auf ihrer Innenfläche mit wenigstens einer Ausnehmung (34) für einen an dem drehbaren Gewindeteil (6) angeordneten Mitnehmerzahn (60) versehen ist.

12. Armatur nach Anspruch 11, **dadurch gekennzeichnet,** daß wenigstens drei Ausnehmungen (34) vorgesehen sind.

13. Armatur nach Anspruch 12, **dadurch gekennzeichnet,** daß die Ausnehmungen (34) und der ihnen jeweils zugeordnete Mitnehmerzahn (60) mit schrägen Flanken (66) versehen sind.

14. Armatur nach Anspruch 11, **dadurch gekennzeichnet,** daß zwischen dem drehbaren Gewindeteil (6) und dem Bremsring (32) ein Radialspiel von wenigstens 0,02 mm vorgesehen ist.

15. Armatur nach Anspruch 1, **dadurch gekennzeichnet,** daß die Reibflächen (10 bis 13) mit einem auch unter Schmiermittel wirksamen Reibbelag versehen sind.

16. Armatur nach Anspruch 15, **dadurch gekennzeichnet,** daß die Reibflächen (10 is 13) mit schmiermittelverdrängenden Radialnuten versehen sind.

17. Armatur nach Anspruch 1, **dadurch gekennzeichnet,** daß die mittlere Entfernung der Reibflächen (10 bis 13) von der Mittenachse des axial verschiebbaren Gewindeteils (2) wenigstens das Doppelte des Flankenradius des Gewindes beträgt.

18. Armatur nach Anspruch 5, **dadurch gekennzeichnet,** daß das reibungsarme Lager (29) annähernd in der gleichen Ebene angeordnet ist wie ein für die Lagerung des drehbaren Gewindeteils (6) in derselben axialen Richtung vorgesehenes reibungsarmes Lager (45).

19. Armatur nach Anspruche 1, **dadurch gekennzeichnet,** daß zum Antrieb des drehbaren Gewindeteils (6) ein axial verschiebbares Zahnradgetriebe vorgesehen ist.

20. Armatur nach Anspruch 19, **dadurch gekennzeichnet,** daß ein Planetengetriebe (80) vorgesehen ist.

21. Armatur nach Anspruch 1, **dadurch gekennzeichnet,** daß als axial verschiebbares Gewindeteil (2) eine im Gehäuse (4) drehfixierte Spindel (2) vorgesehen ist.

22. Armatur nach Anspruch 1, **dadurch gekennzeichnet,** daß als axial verschiebbares Gewindeteil eine im Gehäuse (4) drehfixierte Mutter vorgesehen ist.

## Claims

1. Fitting, in particular for shutting off a flow, having a threaded part (2) rotationally fixed in a housing (4) and axially displaceable, a threaded part (6) mounted in a housing (4) in an axially resilient and rotatable manner, as well as a braking device with at least two friction surfaces (11, 13) which face one another and which, upon the exceeding of a specified desired force on the rotationally fixed threaded part (2), to brake the rotary movement of the rotatable threaded part (6) are pressed against one another by way of an axial displacement with a braking force and form a braking surface, whereby one of the friction surfaces (13) which face one another in each case is connected in a rotationally fixed manner to the rotatable threaded part (6) and the other friction surface (11) is connected to the housing in a rotationally fixed or friction-locking manner, whereby for the resilient bearing of the rotatable threaded part (6) in at least an axial direction a cup spring group (50 and 51) containing at least one cup spring is provided, characterized in that a force-transmitting component (71) initiates the braking force in relation to the width (r₁ - r₂) of the cup spring group (50 and 51) on an intermediate radius (r₀) of the same cup spring group (50 and 51).

2. Fitting according to claim 1, characterized in that the intermediate radius (r₀) differs from the inner or outer radius (r₂ or r₁) by at least 20% of the width (r₁ - r₂).

3. Fitting according to claim 1, characterized in that the friction surface (11) which faces the friction surface (13) which is connected in a rotationally fixed manner to the threaded part (6) is connected to the housing (2) in a friction-locking or form-locking and rotationally fixed manner.

4. Fitting according to claim 1, characterized in that a specified free angle (φ) is provided for the rotational fixing of at least one of the friction surfaces (13) which face one another.

5. Fitting according to claim 1, characterized in that a low-friction bearing (29) is provided for the axial force transmission to the friction surfaces (11, 13).

6. Fitting according to claim 4, characterized in that the free angle (φ) is provided for the friction surfaces (12, 13) connected in a rotationally fixed manner to the rotatable threaded part (6).

7. Fitting according to claim 4, characterized in that the free angle (φ) corresponds to a travel of the rotatable threaded part (6) of at least 0.01 mm.

8. Fitting according to claim 1, characterized in that the force-transmitting component is constructed as a brake sleeve (70 and 71) axially displaceable in the housing (4) and in that friction surfaces (10, 11) are provided and are arranged on a front surface of the brake sleeve.

9. Fitting according to claim 1, characterized in that the friction surfaces (12, 13) connected in a rotationally fixed manner to the rotatable threaded part (6) are located on at least one brake ring (32) arranged in an axially displaceable manner on this threaded part (6).

10. Fitting according to claim 1, characterized in that an axially displaceable brake ring (33) connected in a rotationally fixed manner to the rotatable threaded part (6) is provided and is arranged between two axially displaceable brake sleeves (70, 71) connected to the housing (4) in a rotationally fixed manner, whereby the brake sleeves form the force-transmitting component.

11. Fitting according to claim 9 or 10, characterized in that the brake ring/s (32) is/are provided on its/their inner surface with at least one recess (34) for a carrier tooth (60) arranged on the rotatable threaded part (6).

12. Fitting according to claim 11, characterized in that at least three recesses (34) are provided.

13. Fitting according to claim 12, characterized in that the recesses (34) and the carrier tooth (60) respectively associated therewith are provided with bevelled edges (66).

14. Fitting according to claim 11, characterized in that a radial clearance of at least 0.02 mm is provided between the rotatable threaded part (6) and the brake ring (32).

15. Fitting according to claim 1, characterized in that the friction surfaces (10 to 13) are provided with a friction lining which is also effective under lubricant.

16. Fitting according to claim 15, characterized in that the friction surfaces (10 to 13) are provided with radial grooves which remove lubricant.

17. Fitting according to claim 1, characterized in that the average distance of the friction surfaces (10 to 13) from the centre axis of the axially displaceable threaded part (2) amounts to at least twice the edge radius of the thread.

18. Fitting according to claim 5, characterized in that the low-friction bearing (29) is arranged in approximately the same plane as a low-friction bearing (45) provided for the mounting of the rotatable threaded part (6) in the same axial direction.

19. Fitting according to claim 1, characterized in that an axially displaceable gearing is provided for driving the rotatable threaded part (6).

20. Fitting according to claim 19, characterized in that a planetary gearing (80) is provided.

21. Fitting according to claim 1, characterized in that a spindle (2) rotationally fixed in the housing (4) is provided as axially displaceable threaded part (2).

22. Fitting according to claim 1, characterized in that a nut rotationally fixed in the housing (4) is provided as axially displaceable threaded part.

## Revendications

1. Robinet, destiné notamment à interrompre un écoulement, comportant une partie filetée (2) solidaire en rotation d'un corps (4) avec possibilité de déplacement axial, une partie filetée (6) montée élastiquement dans le sens axial et de manière à pouvoir tourner dans un corps (4), ainsi qu'un dispositif de freinage comportant au moins deux surfaces de frottement (11,13) tournées l'une vers l'autre et qui, lors du dépassement d'une force de consigne prescrite appliquée à la partie filetée (2) solidaire en rotation, sont repoussées l'une contre l'autre par un déplacement axial avec une force de freinage et forme une surface de freinage, l'une des surfaces de frottement (13), qui se font face, étant reliée avec blocage en rotation à la partie filetée (6) tournante et l'autre surface de frottement (11) étant solidaire en rotation ou reliée selon une liaison à friction au corps, au moins un groupe (50 ou 51) de ressorts belleville, comportant au moins un ressort belleville, étant prévu pour le montage au moins dans une direction axiale du support élastique de la partie (6) filetée tournante, caractérisé par le fait qu'un élément de transmission de force (71) applique la force de freinage, rapportée à la largeur (r₁-r₂) du groupe (50 ou 51) de ressorts belleville, sur un rayon intermédiaire (r₀) de ce même groupe (50 ou 51) de ressorts belleville.

2. Robinet suivant la revendication 1, caractérisé par le fait que le rayon intermédiaire (r₀) diffère, d'au moins 20 % de la largeur (r₁-r₂), du rayon intérieur ou extérieur (r₂ ou r₁).

3. Robinet suivant la revendication 1, caractérisé par le fait que la surface de frottement (11), qui est tournée vers la surface de frottement (13) solidaire en rotation de la partie filetée (6), est solidaire en rotation, selon une liaison par frottement ou par formes complémentaires, du corps (2).

4. Robinet suivant la revendication 1, caractérisé par le fait qu'un angle à vide prédéterminé (φ) est prévu pour la solidarisation en rotation d'au moins l'une des surfaces de frottement (13), tournées l'une vers l'autre.

5. Robinet suivant la revendication 1, caractérisé par le fait qu'un palier sans frottement (29) est prévu pour la transmission axiale de la force aux surfaces de frottement (11,13).

6. Robinet suivant la revendication 4, caractérisé par le fait que l'angle à vide (φ) est prévu pour les surfaces de frottement (12,13) solidaires en rotation de la partie filetée (6) tournante.

7. Robinet suivant la revendication 4, caractérisé par le fait que l'angle à vide (φ) correspond à une course de la partie filetée (6) tournante d'au moins 0,01mm.

8. Robinet suivant la revendication 1, caractérisé par le fait que l'élément de transmission de force est agencé sous la forme d'une douille de freinage (70 ou 71) coulissant axialement dans le corps (4), et qu'il est prévu des surfaces de frottement (10,11), qui sont disposées sur une face frontale de la douille de freinage.

9. Robinet suivant la revendication 1, caractérisé par le fait que les surfaces de frottement (12,13), qui sont solidaires en rotation de la partie filetée (6) tournante, se trouvent sur au moins un anneau de freinage (32), coulissant axialement sur cette partie filetée (6).

10. Robinet suivant la revendication 1, caractérisé par le fait qu'il est prévu un anneau de freinage (33), qui est solidaire en rotation de la partie filetée (6) tournante qui peut coulisser axialement et qui est disposé entre deux douilles de freinage (70,71), qui sont solidaires en rotation du corps (4) et peuvent coulisser axialement, les douilles de freinage formant l'élément de transmission de force.

11. Robinet suivant la revendication 9 ou 10, caractérisé par le fait que le ou les anneaux de freinage (32) comportent, sur leur surface intérieure, au moins un évidement (34) pour une dent d'entraînement (60) disposée sur la partie filetée (6) tournante.

12. Robinet suivant la revendication 11, caractérisé par le fait qu'il est prévu au moins trois évidements (34).

13. Robinet suivant la revendication 12, caractérisé par le fait que les évidements (34) et la dent d'entraînement (60), qui leur est respectivement associée, sont pourvus de flancs obliques (66).

14. Robinet suivant la revendication 11, caractérisé par le fait qu'un jeu radial de moins de 0,02 mm est prévu entre la partie filetée (6) tournante et l'anneau de frottement (32).

15. Robinet suivant la revendication 1, caractérisé par le fait que les surfaces de frottement (10 à 13) comportent une garniture de friction qui agit également dans le cas de l'application d'un lubrifiant.

16. Robinet suivant la revendication 15, caractérisé par le fait que les surfaces de frottement (10 à 13) comportent des rainures radiales, qui refoulent le lubrifiant.

17. Robinet suivant la revendication 1, caractérisé par le fait que la distance moyenne des surfaces de frottement (10 à 13) à l'axe médian de la partie filetée (2) coulissant axialement est égal au moins au double du rayon de flanc du filetage.

18. Robinet suivant la revendication 5, caractérisé par le fait que le palier (29), qui présente un faible frottement, est disposé approximativement dans le même plan qu'un palier (45), qui présente peu de frottements et qui est prévu pour le montage de la partie filetée (6) tournante dans la même direction axiale.

19. Robinet suivant la revendication 1, caractérisé par le fait qu'une transmission à engrenages coulissant axialement est prévue pour l'entraînement de la partie filetée (6) tournante.

20. Robinet suivant la revendication 19, caractérisé par le fait qu'il est prévu un engrenage planétaire (80).

21. Robinet suivant la revendication 1, caractérisé par le fait qu'une broche (2) bloquée en rotation dans le corps (4) est prévue en tant qu'élément fileté (2) coulissant axialement.

22. Robinet suivant la revendication 1, caractérisé par le fait qu'un écrou bloqué en rotation dans le corps (4) est prévu en tant qu'élément fileté coulissant axialement.
